# EUROPEAN PATENT SPECIFICATION

(11) **EP 2 899 462 B1**
(45) Date of publication and mention of the grant of the patent: **14.11.2018**
(21) Application number: 13835786.8
(22) Date of filing: 23.08.2013
(51) Int. Cl.: F22D 1/18, F22D 1/02, F22D 1/00

(54) **HEAT RECOVERY SYSTEM AND HEAT RECOVERY METHOD**
WÄRMERÜCKGEWINNUNGSSYSTEM UND WÄRMERÜCKGEWINNUNGSVERFAHREN
SYSTÈME DE RÉCUPÉRATION DE CHALEUR ET PROCÉDÉ DE RÉCUPÉRATION DE CHALEUR

(30) Priority: 06.09.2012 US 201213605199
(43) Date of publication of application: 29.07.2015
(73) Proprietor: Mitsubishi Heavy Industries Engineering, Ltd., Nishi-ku Yokohama-shi Kanagawa 220-8401 (JP)
(72) Inventor: HONJO, Shintaro, New York, New York 10111 (US); TSUJIUCHI, Tatsuya, New York, New York 10111 (US); ITO, Motofumi, New York, New York 10111 (US); WU, Tiffany, New York, New York 10111 (US)
(74) Representative: Studio Torta S.p.A.
(86) International application number: PCT/JP2013/072614
(87) International publication number: WO 2014/038412

(56) References cited:
- EP-A1- 2 444 141
- WO-A1-2012/042892
- WO-A2-2011/062710
- DE-A1-102009 032 537
- JP-A- H0 932 507
- JP-A- H07 293 808
- JP-A- 2011 190 696
- JP-A- 2012 037 180

## Description

### Technical Field

The present invention relates to a heat recovery system and a heat recovery method.

### Background Art

A CO₂ recovery apparatus recovers carbon dioxide (CO₂) which is generated when fossil fuel is burned in a thermal power plant etc. The CO₂ recovery apparatus contacts water solution of amine compound (hereinafter, referred to as "absorbing liquid") with combustion exhaust gas discharged from a boiler and eliminates CO₂ included in the combustion exhaust gas to store it without discharging to ambient air.

The CO₂ recovery apparatus includes an absorbing tower that contacts the combustion exhaust gas with the absorbing liquid and a regeneration tower that heats the absorbing liquid which absorbs CO₂ to discharge CO₂ while regenerating the absorbing liquid. The regenerated absorbing liquid is delivered to the absorbing tower and reused.

Consequently, the CO₂ recovery apparatus is placed in parallel with an electric power generation plant that generates CO₂, and it is desirable to establish a highly-efficient plant as a whole by integration of the CO₂ recovery apparatus and the electric power generation plant.

Patent Literatures 1 and 2 disclose the technology that uses waste heat of a CO₂ recovery apparatus to heat boiler supply water to be supplied to a boiler. Moreover, Patent Literature 3 discloses the technology that uses waste heat of exhaust gas discharged from a boiler to heat boiler supply water to be supplied to a boiler.

### Citation List

### Patent Literature

{PTL 1} Japanese Unexamined Patent Application, Publication No. 2012-37180
{PTL 2} Japanese Unexamined Patent Application, Publication No. 2006-213580
{PTL 3} Japanese Unexamined Patent Application, Publication No. 2006-308269
{PTL 4} DE 10 2009 032537

### Summary of Invention

### Technical Problem

The CO₂ recovery apparatus has to be heated using low-pressure steam when CO₂ is discharged from the absorbing
liquid which absorbs CO₂. Accordingly, an output of a low-pressure steam turbine is lowered and power generation efficiency is lowered. Consequently, it is desirable to an amount of steam extracted from the low-pressure steam turbine is reduced as much as possible to suppress output lowering of the low-pressure steam turbine.

The present invention is made under such circumstances, and an object of the present invention is to provide a heat recovery system that can reduce an amount of steam extracted from a low-pressure steam turbine and a heat recovery method. Solution to Problem

A heat recovery system according to the present invention includes: a CO₂ recovery apparatus which includes an absorbing tower that absorbs CO₂ in exhaust gas into absorbing liquid and a regeneration tower that discharges CO₂ from the absorbing liquid that absorbed CO₂ in the absorbing tower to reuse the absorbing liquid that discharged CO₂ in the regeneration tower in the absorbing tower; a steam turbine; a condenser which condenses steam discharged from the steam turbine; a compressor that compresses the CO₂ from the regeneration tower; a first heat exchange portion in which heat exchange is performed between condensed water generated in the condenser and CO₂ recovered in the regeneration tower of the CO₂ recovery apparatus; a second heat exchange portion in which heat exchange is performed between the condensed water heated in the first heat exchange portion and exhaust gas discharged from a boiler; and the boiler to which the condensed water heated in the second heat exchange portion is supplied as boiler supply water, and a third heat exchange portion which heats the condensed water heated in the second heat exchange portion and returns the heated condensed water to the second heat exchange portion, and a control portion which switches between the boiler or the third heat exchange portion as a supply destination of the condensed water heated in the second heat exchange portion.

According to this configuration, the condensed water generated in the condenser is subjected to heat exchange with CO₂ recovered in the regeneration tower of the CO₂ recovery apparatus in the first heat exchange portion, and subjected to heat exchange with exhaust gas discharged from the boiler in the second heat exchange portion. Consequently, waste heat of the CO₂ recovery apparatus and waste heat of a boiler exhaust system can be recovered.

Also according to this configuration, by switching the supply destination, the condensed water heated in the second heat exchange portion is heated in the third heat exchange portion and again heated in the second heat exchange portion. For example, when the temperature of the condensed water supplied from the condenser is low or an amount of heat capable of heat exchange in the first heat exchange portion is small at the time of activation of the CO2 recovery apparatus, by forming a circulation route between the second heat exchange portion and the third heat exchange portion, temperature lowering of the second heat exchange portion can be prevented.

In the above invention, an entire amount of condensed water generated in the condenser is used as the condensed water subjected to heat exchange in the first heat exchange portion and the second heat exchange portion.

According to this configuration, the entire amount of the condensed water generated in the condenser is subjected to heat exchange in the first heat exchange portion and the second heat exchange portion and supplied to the boiler as boiler supply water. At this time, a water supply heater that heats the condensed water and supplies it to the boiler is omitted. As a result, steam extraction from the steam turbine for the water supply heater can be eliminated, and an amount of consumption of steam is reduced, which improves turbine efficiency.

In a heat recovery method according to the present invention which uses a CO₂ recovery apparatus including an absorbing tower that absorbs CO₂ in exhaust gas into absorbing liquid and a regeneration tower that discharges CO₂ from the absorbing liquid that absorbs CO₂ in the absorbing tower and reuses the absorbing liquid that discharged CO₂ in the regeneration tower in the absorbing tower, the method including: a first step of condensing steam discharged from a steam turbine; a second step of compressing CO₂ discharged from the regeneration tower; a third step of performing heat exchange between generated condensed water and CO₂ recovered in the regeneration tower of the CO₂ recovery apparatus in a first heat exchange portion; a fourth step of performing heat exchange between the condensed water heated in the first heat exchange portion and exhaust gas discharged from a boiler in a second heat exchange portion; and a fifth step of supplying the condensed water heated in the second heat exchange portion to the boiler as boiler supply water, and a sixth step of heating the condensed water heated in the second heat exchange portion in a third heat exchange portion which is different from the boiler and heating the condensed water heated in the third heat exchange portion in the second heat exchange portion may be further included.

### Advantageous Effects of Invention

According to the present invention, when boiler supply water is heated, waste heat recovered from the CO₂ recovery apparatus and waste heat recovered from the boiler exhaust system are used, so that an amount of steam extracted from the low-pressure steam turbine can be reduced.

### Brief Description of Drawings

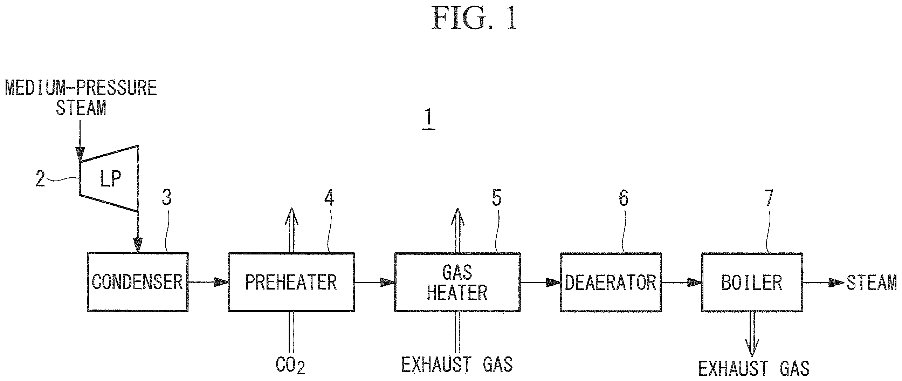

{Fig. 1}
   Fig. 1 is a schematic view showing a boiler water supply system according to one embodiment of the present invention.
{Fig. 2}
   Fig. 2 is a schematic view showing a boiler exhaust system according to one embodiment of the present invention.
{Fig. 3}
   Fig. 3 is a schematic view showing a CO₂ recovery apparatus according to one embodiment of the present invention.
{Fig. 4}
   Fig. 4 is a schematic view showing a modification of the boiler water supply system according to one embodiment of the present invention.
{Fig. 5}
   Fig. 5 is a schematic view showing a conventional boiler water supply system.

### {Description of Embodiments}

Hereinafter, a boiler water supply system 1 according to one embodiment of the present invention will be explained with reference to Fig. 1.

As shown in Fig. 1, a boiler water supply system 1 is constituted by a condenser 3, a preheater 4, a gas heater 5 and the like. The boiler water supply system 1 condenses steam discharged from a low-pressure steam turbine 2 in the condenser 3, and condensed water condensed and generated by the condenser 3 is heated to be supplied to a boiler 7. The boiler water supply system is an example of a heat recovery system, which recovers waste heat of a CO₂ recovery apparatus 11 and waste heat of exhaust gas etc. when condensed water is heated.

The low-pressure steam turbine 2 is driven to rotate when medium-pressure steam is supplied from a medium pressure turbine (not shown) for example. The low-pressure steam turbine 2 is connected to a generator (not shown) via a rotation shaft, and a rotary drive force is used for power generation in the generator. The low-pressure steam turbine 2 discharges the generated low-pressure steam to the condenser 3.

The condenser 3 condenses low-pressure steam supplied from the low-pressure steam turbine 2. The generated condensed water due to condensation of low-pressure steam in the condenser 3 is supplied to the preheater 4. The temperature of the condensed water supplied from the condenser 3 to the preheater 4 is, for example, about 38°C.

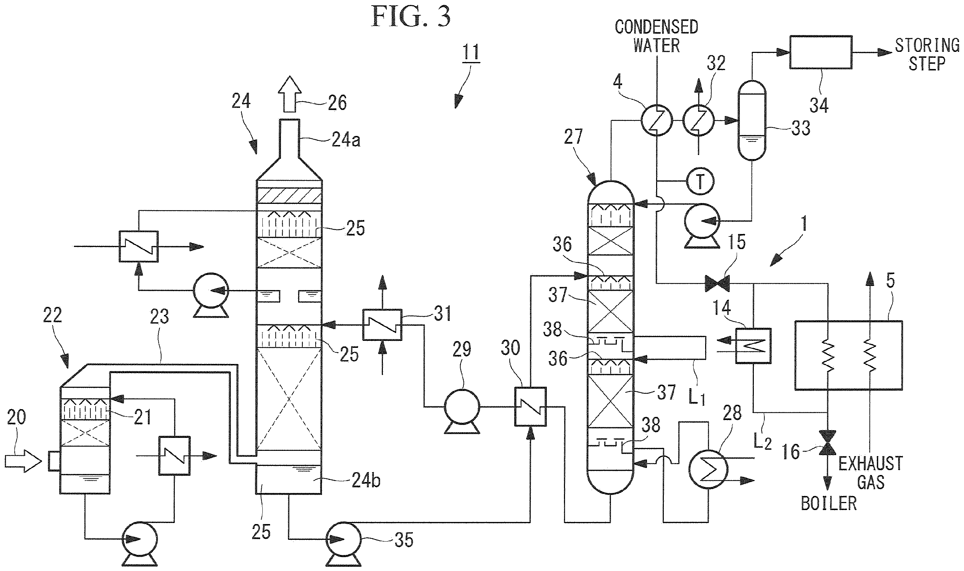

To the preheater 4, the condensed water generated in the condenser 3 is supplied from the condenser 3. Moreover, to the preheater 4, CO₂ recovered in a regeneration tower 27 of the CO₂ recovery apparatus 11 shown in Fig. 3 is supplied. In the preheater 4, heat exchange is performed between the condensed water generated in the condenser 3 and CO₂ recovered in the regeneration tower 27 of the CO₂ recovery apparatus 11. The condensed water is heated by passing through the preheater 4, and the heated condensed water is supplied to the gas heater 5. By doing this, the preheater 4 can recover waste heat of the CO₂ recovery apparatus 11. The temperature of the condensed water supplied from the preheater 4 to the gas heater 5 is, for example, about 75°C.

To the gas heater 5, condensed water heated by the preheater 4 is supplied from the preheater 4. Moreover, to the gas heater 5, exhaust gas discharged from the boiler 7 is supplied. In the gas heater 5, heat exchange is performed between the condensed water heated in the preheater 4 and the exhaust gas discharged from the boiler 7. The condensed water is heated by passing through the gas heater 5, and the heated condensed water is supplied to a deaerator 6 connected to the boiler 7. By doing this, the gas heater 5 can recover waste heat of a boiler exhaust system. The temperature of the condensed water supplied from the gas heater 5 to the deaerator 6 is, for example, about 137°C.

Moreover, the condensed water generated in the condenser 3 is heated by the preheater 4 and the gas heater 5, deaerated in the deaerator 6, and introduced into the boiler 7 as boiler supply water.

As described above, according to the boiler water supply system 1 according to this embodiment, condensed water generated in the condenser 3 is subjected to heat exchange with CO₂ recovered in the regeneration tower 27 of the CO₂ recovery apparatus 11 in the preheater 4, and subjected to heat exchange with exhaust gas discharged from the boiler 7 in the gas heater 5. As a result, the boiler water supply system 1 can recover waste heat in the CO₂ recovery apparatus 11 and waste heat in the boiler exhaust system.

Moreover, in the above-described boiler water supply system 1, the entire amount of the condensed water generated in the condenser 3 is subjected to heat exchange in the preheater 4 and the gas heater 5, not branched in a path from the condenser 3 to the boiler 7, and the condensed water is supplied to the boiler 7 as boiler supply water.

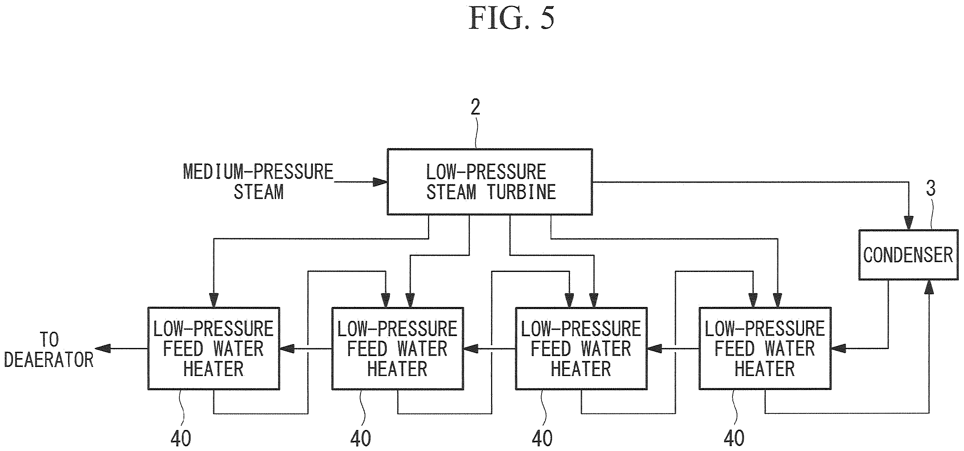

Conventionally, when condensed water generated in the condenser 3 is supplied as boiler supply water to the boiler 7, as shown in Fig. 5, the condensed water has been heated by extracting low-pressure steam from the low-pressure steam turbine 2 and performing heat exchange between the condensed water and the low-pressure steam in a low-pressure feed water heater 40. In this embodiment, the low-pressure feed water heater 40 may be omitted by adjusting the temperature condition such that the entire amount of the condensed water generated in the condenser 3 is supplied to the boiler 7 as boiler supply water. As a result, steam extraction from the low-pressure steam turbine 2 for the low-pressure feed water heater 40 can be eliminated, and an amount of steam consumption is reduced to improve turbine efficiency.

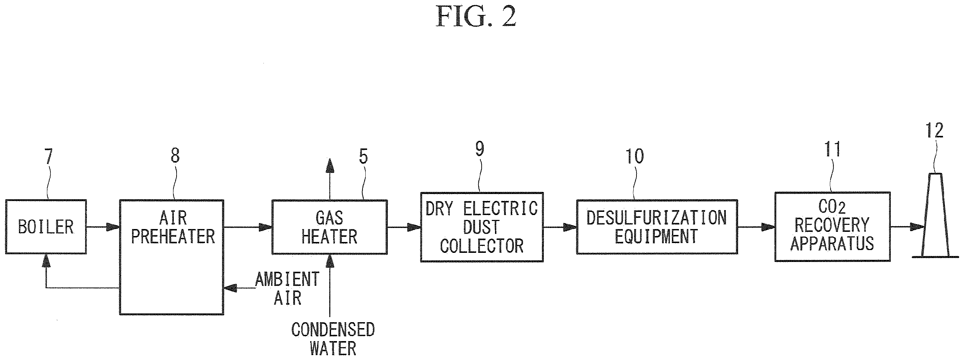

Next, with reference to Fig. 2, the boiler exhaust system according to this embodiment and an installation example of the gas heater 5 in the boiler exhaust system will be explained.

The boiler exhaust system eliminates dust from exhaust gas discharged from the boiler 7 as well as executes desulfurization, and discharges exhaust gas to ambient air. The boiler exhaust system is constituted by, for example, an air preheater 8, the gas heater 5, a dry electric dust collector 9, a desulfurization equipment 10, a CO₂ recovery apparatus 11 and a stack 12.

To the air preheater 8, ambient air is supplied from the outside. Moreover, to the air preheater 8, exhaust gas discharged from the boiler 7 is supplied. In the air preheater 8, heat exchange is performed between the ambient air to be introduced into the boiler 7 and the exhaust gas discharged from the boiler 7. The exhaust gas passing through the air preheater 8 is cooled and supplied to the gas heater 5. In addition, the ambient air passing through the air preheater 8 is heated and introduced into the boiler 7.

As described before, in the gas heater 5, heat exchange is performed between the condensed water heated by the preheater 4 and the exhaust gas discharged from the boiler 7. The exhaust gas passing through the gas heater 5 is cooled and supplied to the dry electric dust collector 9. Since the exhaust gas passes through the air preheater 8 and the gas heater 5, its temperature is lowered before it is introduced into the dry electric dust collector 9, which improves removing property of dust and SO₃ in the dry electric dust collector 9.

The dry electric dust collector 9 removes dust from the cooled exhaust gas. The exhaust gas in which the dust is removed is supplied to the desulfurization equipment 10. The desulfurization equipment 10 mainly absorbs and removes sulfurous acid gas from the exhaust gas and removes dust. The exhaust gas passing through the desulfurization equipment 10 is introduced into the CO₂ recovery apparatus 11.

Moreover, the CO₂ recovery apparatus 11 removes CO₂ from the exhaust gas. The exhaust gas in which CO₂ is removed passes through the stack 12 to be discharged to ambient air. In addition, CO₂ removed from the exhaust gas is compressed to be transmitted to a storage step.

As explained above, the condensed water generated in the condenser 3 is subjected to heat exchange with the exhaust gas discharged from the boiler 7 in the gas heater 5 of the boiler exhaust system. Additionally, while an arrangement is made in the order of the gas heater 5 and the dry electric dust collector 9 from the upstream side of the exhaust gas flow in the above-described boiler exhaust system, the present invention is not limited to this example, and for example, an arrangement may be made in the order of the dry electric dust collector 9 and the gas heater 5 from the upstream side of the exhaust gas flow.

Next, the CO₂ recovery apparatus 11 according to this embodiment and an installation example of the preheater 4 in the CO₂ recovery apparatus 11 will be explained with reference to Fig. 3.

In the CO₂ recovery apparatus 11, exhaust gas 20 including CO₂ discharged from facilities such as the boiler 7 and a gas turbine (not shown) is supplied to cooling tower 22 by a not shown blower. The exhaust gas 20 supplied to the cooling tower 22 is cooled by cooling water 21 in the cooling tower 22.

The cooled exhaust gas 20 including CO₂ is supplied from a lower portion of an absorbing tower 24 via an exhaust gas line 23. In the absorbing tower 24, for example, alkanolamine-based CO₂ absorbing liquid 25 (amine solution) is countercurrently contacted to the exhaust gas 20. By doing this, CO₂ in the exhaust gas 20 is absorbed in the CO₂ absorbing liquid 25, and CO₂ is removed from the exhaust gas 20 discharged from an industrial installation. Purged gas 26 in which CO₂ is removed is discharged from a tower top portion 24a of the absorbing tower 24. The purged gas 26 is transmitted to ambient air from the above-described stack 12.

The CO₂ absorbing liquid 25 that absorbs CO₂ in the absorbing tower 24 is stored in a tower bottom portion 24b, and transmitted to the regeneration tower 27 by a pump 35.

The CO₂ absorbing liquid 25 (rich solution) discharges CO₂ by being heated by steam generated in a reboiler 28 in the regeneration tower 27 to be regenerated as CO₂ absorbing liquid 25 (lean solution) that can absorb CO₂. The regenerated CO₂ absorbing liquid 25 is, after it is cooled via a heat exchanger 30 and a lean solution cooling apparatus 31 by a pump 29, supplied to the absorbing tower 24 again and reused.

The CO₂ discharged from the CO₂ absorbing liquid 25 in the regeneration tower 27 sequentially passes through the preheater 4, a cooler 32 and a gas-liquid separator 33, is delivered to a CO₂ compression apparatus 34 to be compressed, and transmitted to the storage step.

In the regeneration tower 27 of the CO₂ recovery apparatus 11, a multiple stages of (for example, two or three stages) regeneration portions are placed. Each regeneration portion includes a nozzle 36 that lowers the CO₂ absorbing liquid 25 (rich solution), a packed layer 37 that countercurrently contacts the CO₂ absorbing liquid which is lowered from the nozzle 36 with steam for heating and a tray portion 38 that stores the CO₂ absorbing liquid 25 (semi-lean solution) in which CO₂ is partially removed.

The supply tube L₁ supplies the CO₂ absorbing liquid 25 (semi-lean solution) stored in the tray portion 38 of the regeneration portion to the packed layer 37 of the regeneration portion via the nozzle 36.

The CO₂ compression apparatus 34 includes a compressor (not shown) that compresses CO₂, a cooler (not shown) that cools the compressed CO₂ whose temperature is raised and a gas-liquid separator (not shown). In this embodiment, in the CO₂ compression apparatus 34, the preheater 4 according to this embodiment may be placed in parallel with or instead of the cooler. At this time, in the preheater 4, heat exchange is performed between the compressed and high-temperature CO₂ and the condensed water flowing in the boiler water supply system 1. The CO₂ passing through the preheater 4 is cooled. On the other hand, the condensed water passing through the preheater 4 is heated.

As explained above, the condensed water generated in the condenser 3 is subjected to heat exchange with CO₂ discharged from the CO₂ absorbing liquid 25 in the regeneration tower 27 or CO₂ compressed in the CO₂ compression apparatus 34.

Next, a start-up method of the boiler water supply system 1 according to this embodiment will be explained.

In addition to the above configuration, as shown in Fig. 3, a return tube L₂ connected to the outlet side and the inlet side of the gas heater 5 is provided to the boiler water supply system 1, and an auxiliary heater 14 is placed to the return tube L₂. Moreover, control valves 15 and 16 are placed to the piping of the boiler water supply system 1. The control valve 15 is placed on the upstream side from a meeting with the return tube L₂ on the inlet side of the gas heater 5, and the control valve 16 is placed on the downstream side from a meeting with the return tube L₂ on the outlet side of the gas heater 5.

When the temperature of the condensed water supplied from the condenser 3 is low or an amount of heat capable of heat exchange in the preheater 4 is small at the time of start-up of the CO₂ recovery apparatus 11, the temperature of the gas heater could be excessively lowered.

Accordingly, the temperature of the condensed water at the outlet of the preheater 4 is detected, and if the detected temperature is lower than a predetermined temperature, the degree of opening of the control valves 15 and 16 is adjusted to be throttled to supply the condensed water from the gas heater 5 to the auxiliary heater 14. Steam is supplied to the auxiliary heater 14, and heat exchange is performed between the supplied steam and the condensed water heated in the gas heater 5. By passing through the auxiliary heater 14, the condensed water is further heated, and thereafter, heated again by the gas heater 5.

Since the condensed water circulates between the gas heater 5 and the auxiliary heater 14, the temperature of the condensed water to be supplied to the gas heater 5 is raised in a short time. This prevents temperature lowering in a heat exchanger, for example, a fin tube, and corrosion due to sulfuric acid condensation on the surface of fin tube can be prevented.

After that, if the temperature of the condensed water at the outlet of the preheater 4 is higher than a predetermined temperature, the degree of opening of the control valves 15 and 16 is adjusted to be opened to reduce an amount of supply of the condensed water to the auxiliary heater 14. This moves into a normal operation, and the entire amount of the condensed water generated in the condenser 3 is, after it is subjected to heat exchange in the preheater 4 and the gas heater 5, supplied to the boiler 7 as boiler supply water.

As described above, in this embodiment, an explanation is made on the configuration that the entire amount of the condensed water generated in the condenser 3 is subjected to heat exchange in the preheater 4 and the gas heater 5 and supplied to the boiler 7 as boiler supply water. According to this configuration, as explained above, the preheater 4 and the gas heater 5 can heat the condensed water instead of the conventional low-pressure feed water heater 40 (see Fig. 5).

Especially, in a case where a plant in which the CO₂ recovery apparatus 11 and an electric power generation plant including a boiler are placed in parallel is newly installed, since a plant required for steam extraction the low-pressure steam turbine 2 for the low-pressure feed water heater 40 is unnecessary, a facility configuration of the plant can be simplified and initial cost can be reduced.

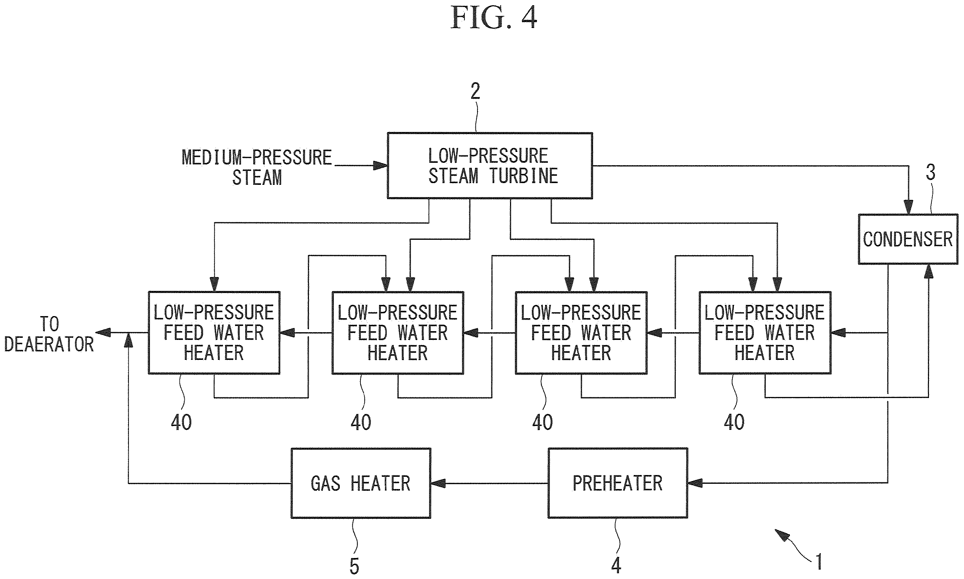

Additionally, the present invention is not limited to a case where the low-pressure feed water heater 40 is not placed. For example, as shown in Fig. 4, to the boiler water supply system having the low-pressure feed water heater 40 in the existing electric power facility, the boiler water supply system 1 according to the this embodiment described above may be placed in parallel. Even in such a case, compared to the conventional boiler water supply system shown in Fig. 5, extracted steam to be supplied from the low-pressure steam turbine 2 to the low-pressure feed water heater 40 can be reduced, and turbine efficiency can be improved.

### Reference Signs List

- 1: boiler water supply system
- 2: low-pressure steam turbine
- 3: condenser
- 4: preheater
- 5: gas heater
- 6: deaerator
- 7: boiler
- 8: air preheater
- 9: dry electric dust collector
- 10: desulfurization equipment
- 11: CO₂ recovery apparatus
- 12: stack
- 14: auxiliary heater
- 15, 16: control valve
- 20: exhaust gas
- 24: absorbing tower
- 27: regeneration tower
- 28: reboiler
- 34: CO₂ compression apparatus
- 35: pump
- 40: low-pressure feed water heater

## Claims

1. A heat recovery system (1) comprising:
a CO₂ recovery apparatus (11) which includes an absorbing tower (24) that absorbs CO₂ in exhaust gas into absorbing liquid and a regeneration tower (27) that discharges CO₂ from the absorbing liquid that absorbed CO₂ in the absorbing tower (24) to reuse the absorbing liquid that discharged CO₂ in the regeneration tower (27) in the absorbing tower (24);
a steam turbine (2);
a condenser (3) which condenses steam discharged from the steam turbine (2), a compressor (34) that compresses the CO₂ from the regeneration tower (27);
a first heat exchange portion (4) in which heat exchange is performed between condensed water generated in the condenser (3) and CO₂ compressed by the compressor (34);
a second heat exchange portion (5) in which heat exchange is performed between the condensed water heated in the first heat exchange portion (4) and exhaust gas discharged from a boiler (7);
the boiler (7) to which the condensed water heated in the second heat exchange portion (5) is supplied as boiler supply water;
and **characterized by** comprising:
a third heat exchange portion (14) which heats the condensed water heated in the second heat exchange portion (5) and returns the heated condensed water to the second heat exchange portion (5); and
a control portion (15, 16) which switches between the boiler or the third heat exchange portion as a supply destination of the condensed water heated in the second heat exchange portion (5).

2. The heat recovery system (1) according to claim 1, wherein an entire amount of condensed water generated in the condenser (3) is used as the condensed water subjected to heat exchange in the first heat exchange portion (4) and the second heat exchange portion (5).

3. A heat recovery method which uses a CO₂ recovery apparatus (11) including an absorbing tower (24) that absorbs CO₂ in exhaust gas into absorbing liquid and a regeneration tower (27) that discharges CO₂ from the absorbing liquid that absorbs CO₂ in the absorbing tower (24) and reuses the absorbing liquid that discharged CO₂ in the regeneration tower (27) in the absorbing tower (24), the method comprising:
a first step of condensing steam discharged from a steam turbine (2); a second step of compressing CO₂ discharged from the regeneration tower (27);
a third step of performing heat exchange between generated condensed water and CO₂ compressed in the second step;
a fourth step of performing heat exchange between the condensed water heated in a first heat exchange portion (4) and exhaust gas discharged from a boiler (7) in a second heat exchange portion (5);
a fifth step of supplying the condensed water heated in the second heat exchange portion (5) to the boiler (7) as boiler supply water; and
**characterized by** comprising:
a sixth step of heating the condensed water heated in the second heat exchange portion (5) in a third heat exchange portion (14) which is different from the boiler (7) and heating the condensed water heated in the third heat exchange portion (14) in the second heat exchange portion (5).

## Patentansprüche

1. Wärmerückgewinnungssystem (1), umfassend:
eine CO₂-Rückgewinnungsvorrichtung (11), die einen Absorptionsturm (24), der CO₂ im Abgas in eine Absorptionsflüssigkeit absorbiert, und einen Regenerationsturm (27) beinhaltet, der CO₂ von der Absorptionsflüssigkeit, die CO₂ absorbiert hat, in den Absorptionsturm (24) abgibt, um die Absorptionsflüssigkeit, die CO₂ in den Regenerationsturm (27) abgegeben hat, in dem Absorptionsturm (24) wieder zu verwenden;
eine Dampfturbine (2);
einen Kondensator (3), der den von der Dampfturbine (2) abgegebenen Dampf kondensiert,
einen Kompressor (34), der das CO₂ von dem Regenerationsturm (27) komprimiert;
einen ersten Wärmetauschabschnitt (4), in dem ein Wärmetausch zwischen dem Kondenswasser, das in dem Kondensator (3) erzeugt wird, und dem durch den Kompressor (34) komprimierten CO₂ durchgeführt wird;
einen zweiten Wärmetauschabschnitt (5), in dem ein Wärmetausch zwischen dem in dem ersten Wärmetauschabschnitt (4) erwärmten Kondenswasser und dem von einem Heizkessel (7) abgegebenen Abgas durchgeführt wird;
den Heizkessel (7), an den das in dem zweiten Wärmetauschabschnitt (5) erwärmte Kondenswasser als Heizkesselzufuhrwasser geliefert wird und **dadurch gekennzeichnet, dass** es umfasst:
einen dritten Wärmetauschabschnitt (14), welcher das in dem zweiten Wärmetauschabschnitt (5) erwärmte Kondenswasser erwärmt und das erwärmte Kondenswasser an den zweiten Wärmetauschabschnitt (5) zurückführt; und
einen Kontrollabschnitt (15, 16), der zwischen dem Heizkessel oder dem dritten Wärmetauschabschnitt als Zufuhrort für das in dem zweiten Wärmetauschabschnitt (5) erwärmten Kondenswasser schaltet.

2. Wärmerückgewinnungssystem (1) nach Anspruch 1, wobei eine Gesamtmenge an Kondenswasser, das in dem Kondensator (3) erzeugt wird, als das Kondenswasser verwendet wird, das einem Wärmetausch in dem ersten Wärmetauschabschnitt (4) und dem zweiten Wärmetauschabschnitt (5) unterzogen wird.

3. Wärmerückgewinnungsverfahren, welches eine CO₂-Rückgewin-nungsvorrichtung (11) verwendet, die einen Absorptionsturm (24), der CO₂ im Abgas in eine Absorptionsflüssigkeit absorbiert, und einen Regenerationsturm (27) beinhaltet, der CO₂ von der Absorptionsflüssigkeit, die CO₂ absorbiert hat, in den Absorptionsturm (24) abgibt und die Absorptionsflüssigkeit, die CO₂ in den Regenerationsturm (27) abgegeben hat, in dem Absorptionsturm (24) wieder verwendet,
wobei das Verfahren umfasst:
einen ersten Schritt des Kondensierens des von einer Dampfturbine (2) abgegebenen Dampfes;
einen zweiten Schritt des Komprimierens des CO₂, das von dem Regenerationsturm (27) abgegeben wird;
einen dritten Schritt des Durchführens eines Wärmetausches zwischen dem erzeugten Kondenswasser und dem in dem zweiten Schritt komprimierten CO₂;
einen vierten Schritt des Durchführens eines Wärmetausches zwischen dem Kondenswasser, das in einem ersten Wärmetauschabschnitt (4) erwärmt wird, und Abgas, das von einem Heizkessel (7) in einem zweiten Wärmetauschabschnitt (5) abgegeben wird;
einen fünften Schritt des Zuführens von Kondenswasser, das in dem zweiten Wärmetauschabschnitt (5) erwärmt wird, zu dem Heizkessel (7) als Heizkesselzufuhrwasser; und
**dadurch gekennzeichnet, dass** es umfasst:
einen sechsten Schritt des Erwärmens des Kondenswassers, das in dem zweiten Wärmetauschabschnitt (5) erwärmt wird, in einem dritten Wärmetauschabschnitt (14), der sich von dem Heizkessel (7) unterscheidet, und Erwärmen des Kondenswassers, das in dem dritten Wärmetauschabschnitt (14) erwärmt wird, in dem zweiten Wärmetauschabschnitt (5).

## Revendications

1. Système de récupération de chaleur (1) comprenant :
un appareil de récupération de CO₂ (11) qui inclut une tour d'absorption (24) qui absorbe le CO₂ dans des gaz d'échappement à l'intérieur d'un liquide absorbant et une tour de régénération (27) qui décharge le CO₂ depuis le liquide absorbant qui a absorbé le CO₂ dans la tour d'absorption (24) de manière à réutiliser le liquide absorbant qui a déchargé le CO₂ dans la tour de régénération (27) dans la tour d'absorption (24) ;
une turbine à vapeur (2) ;
un condenseur (3) qui condense la vapeur qui est déchargée depuis la turbine à vapeur (2) ;
un compresseur (34) qui comprime le CO₂ en provenance de la tour de régénération (27) ;
une première partie d'échange thermique (4) dans laquelle un échange thermique est réalisé entre l'eau condensée qui est générée dans le condenseur (3) et le CO₂ qui est comprimé par le compresseur (34) ;
une deuxième partie d'échange thermique (5) dans laquelle un échange thermique est réalisé entre l'eau condensée qui est chauffée dans la première partie d'échange thermique (4) et les gaz d'échappement qui sont déchargés depuis une chaudière (7) ;
la chaudière (7) sur laquelle l'eau condensée qui est chauffée dans la deuxième partie d'échange thermique (5) est alimentée en tant qu'eau d'alimentation de chaudière ; et
**caractérisé en ce qu'**il comprend :
une troisième partie d'échange thermique (14) qui chauffe l'eau condensée qui est chauffée dans la deuxième partie d'échange thermique (5) et qui retourne l'eau condensée chauffée à la deuxième partie d'échange thermique (5) ; et
une partie de commande (15, 16) qui réalise une commutation entre la chaudière ou la troisième partie d'échange thermique en tant que destination d'alimentation de l'eau condensée qui est chauffée dans la deuxième partie d'échange thermique (5).

2. Système de récupération de chaleur (1) selon la revendication 1, dans lequel une quantité totale d'eau condensée qui est générée dans le condenseur (3) est utilisée en tant qu'eau condensée qui est soumise à un échange thermique dans la première partie d'échange thermique (4) et dans la deuxième partie d'échange thermique (5).

3. Procédé de récupération de chaleur qui utilise un appareil de récupération de CO₂ (11) qui inclut une tour d'absorption (24) qui absorbe le CO₂ dans des gaz d'échappement à l'intérieur d'un liquide absorbant et une tour de régénération (27) qui décharge le CO₂ depuis le liquide absorbant qui a absorbé le CO₂ dans la tour d'absorption (24) et qui réutilise le liquide absorbant qui a déchargé le CO₂ dans la tour de régénération (27) dans la tour d'absorption (24) ; le procédé comprenant :
une première étape de condensation de la vapeur qui est déchargée depuis une turbine à vapeur (2) ;
une deuxième étape de compression du CO₂ qui est déchargé depuis la tour de régénération (27) ;
une troisième étape de réalisation d'un échange thermique entre l'eau condensée générée et le CO₂ comprimé au niveau de la deuxième étape ;
une quatrième étape de réalisation d'un échange thermique entre l'eau condensée qui est chauffée dans une première partie d'échange thermique (4) et les gaz d'échappement qui sont déchargés depuis une chaudière (7) au niveau d'une deuxième partie d'échange thermique (5) ;
une cinquième étape d'alimentation de l'eau condensée qui est chauffée dans la deuxième partie d'échange thermique (5) sur la chaudière (7) en tant qu'eau d'alimentation de chaudière ; et
**caractérisé en ce qu'**il comprend :
une sixième étape de chauffage de l'eau condensée qui est chauffée dans la deuxième partie d'échange thermique (5) dans une troisième partie d'échange thermique (14) qui est différente de la chaudière (7) et de chauffage de l'eau condensée qui est chauffée dans la troisième partie d'échange thermique (14) dans la deuxième partie d'échange thermique (5).
